# FASCICULE DE BREVET EUROPEEN

(11) **EP 3 597 848 B1**
(45) Date de publication et mention de la délivrance du brevet: **18.01.2023**
(21) Numéro de dépôt: 19185538.6
(22) Date de dépôt: 10.07.2019
(51) Int. Cl.: E05F 15/41

(54) **PROCÉDÉ DE GESTION D'OBSTACLES DANS UNE INSTALLATION CONTRÔLANT LES DÉPLACEMENTS DE VANTAUX OU DE VOLETS BATTANTS**
STEUERUNGSVERFAHREN VON HINDERNISSEN IN EINER ANLAGE, DIE DIE BEWEGUNGEN VON ÖFFNUNGSFLÜGELN ODER KLAPPLÄDEN KONTROLLIERT
METHOD OF MANAGING OBSTACLES IN AN INSTALLATION BY CONTROLLING THE MOVEMENTS OF DOOR LEAFS OR HINGED SHUTTERS

(30) Priorité: 18.07.2018 FR 1856641
(43) Date de publication de la demande: 22.01.2020
(73) Titulaire: BHG, 68220 Attenschwiller (FR)
(72) Inventeur: PERSONNIER, Janick, 68130 ALTKIRCH (FR); JACQUIN, Dominique, 68130 CARSPACH (FR); FRITSCH, Thomas, 67800 HOENHEIM (FR)
(74) Mandataire: Littolff, Denis

(56) Documents cités:
- EP-A1- 2 453 092
- EP-A1- 3 235 992
- DE-U1-202016 103 746
- FR-A1- 2 646 202

## Description

La présente invention a trait à un procédé de gestion d'obstacles dans une installation contrôlant le déplacement d'au moins un vantail de volet battant ou de porte motorisé(e). Ces vantaux sont en général mobiles entre deux butées bornant leur déplacement, lequel permet respectivement le dégagement et l'obturation de baies de portes ou de fenêtres.

Pour assurer un fonctionnement notamment sécuritaire de volets battants motorisés, qui se déplacent de manière automatisée sur commande d'un utilisateur, des moyens de test du comportement mécanique des éléments mobiles sont mis en œuvre en permanence dans les installations existantes. Les moyens d'entraînement motorisés sont en fait commandés et contrôlés par une unité de contrôle électronique, disposant en particulier de moyens de tests de signaux indicateurs de certaines anomalies qui peuvent survenir dans les périodes actives. Chaque volet peut être muni de sa propre unité de contrôle, mais il peut aussi y avoir mutualisation des fonctions de commande pour deux battants d'une même baie, sans incidence notable sur les aspects liés à la sécurité et, plus généralement, à la bonne marche du système.

Un exemple emblématique d'incident que doit savoir gérer une telle installation motorisée automatisée concerne par exemple la sécurité des personnes, et en particulier des enfants : si un enfant est piégé entre un volet battant en cours d'ouverture et le mur contre lequel celui-ci est destiné à reposer, il est impératif que le battant stoppe après contact avec le corps. Il est donc nécessaire de tester en permanence si le déplacement du volet se fait normalement ou s'il apparaît qu'un obstacle se dresse sur le trajet. Il est par exemple connu du document EP 3 235 992 Al un actionneur de fenêtre qui inverse momentanément sa course pour éviter le pincement des personnes avant de reprendre sa course normale.

L'examen permanent des conditions de fonctionnement est par ailleurs utile pour le constructeur, pour préserver autant que possible la pérennité de l'installation : sans dispositif de contrôle, un obstacle matériel sur le trajet d'un battant est susceptible d'endommager le vantail lui-même, et/ou plus probablement les moyens d'entraînement. Ceux-ci sont dans la plupart des cas constitués de moteurs électriques, qui doivent notamment être protégés contre les blocages en rotation entraînant des conditions de fonctionnement extrêmes loin des valeurs nominales pour lesquelles ils sont conçus. Les circuits comportent des moyens de mesure de ces conditions et sont conçus pour stopper les moteurs avant tout dégât.

Des normes officielles existent par ailleurs, qui encadrent de manière précise les modalités de contrôle et de gestion des battants lors de leurs déplacements. Ces normes ont uniquement pour vocation d'assurer la sécurité des individus, mais les contraintes édictées servent aussi, secondairement, à pérenniser les matériels.

Parmi les routines de commande des vantaux en mouvement souvent préconisées, on trouve ainsi la séquence suivante : lorsqu'un battant rencontre un obstacle, et qu'un capteur prévu à cet effet dans le circuit des moyens d'entraînement détecte la résistance suscitée par celui-ci, l'unité électronique, avertie par le capteur, stoppe immédiatement les moyens d'entraînement du battant et n'autorise plus que la commande en sens inverse, à l'initiative de l'utilisateur. Le vantail repart alors vers sa butée précédente.

Ce mode de fonctionnement, certainement adéquat pour répondre à des préoccupations sécuritaires, pose néanmoins problème dans certaines circonstances. Ainsi en est-il du fonctionnement de ces installations dans des régions très venteuses, par exemple les zones littorales. Les vents y sont parfois suffisamment forts pour bloquer le déplacement d'un vantail, et ils sont alors assimilés par le système à des obstacles, puisque le blocage des moyens moteurs entraîne exactement les mêmes effets que lorsqu'un obstacle physique s'interpose. Dans ce cas, le programme gère l'installation selon un comportement classique en pareil cas, et donne la réponse sécuritaire normative : les volets battants ne peuvent être pilotés qu'en sens inverse du sens de déplacement avant l'arrêt. Autant dire qu'en cas de vent fort, selon l'orientation de la façade munie des vantaux commandés, il peut devenir quasi impossible d'ouvrir les vantaux le matin, ou de les fermer le soir, si l'on reste dans le mode de fonctionnement avec les protocoles sécuritaires normaux.

Ces limitations constituent un réel problème pour les utilisateurs, qui se trouvent en présence d'un système fonctionnel dans la plupart des situations, nécessaire pour des raisons de sécurité et à ce titre non débrayable, mais qui cesse de l'être en présence de conditions climatiques particulières. Ce qui peut rester anecdotique dans certaines régions ne l'est pas du tout dans d'autres endroits, où ce dysfonctionnement est un vrai problème notamment parce que la fréquence de son apparition est élevée.

C'est à la résolution de ce problème que s'attache la présente invention, en proposant une solution qui conserve les réponses aux questions sécuritaires mentionnées auparavant tout en intégrant une aptitude supplémentaire permettant de répondre aux limitations du système en cas de vents de force élevée.

L'invention a en somme trait à un procédé de gestion d'obstacles amélioré, qui s'adresse classiquement à une installation contrôlant le déplacement d'au moins un vantail de volet battant ou de porte entraîné par des moyens moteurs. Le vantail est déplaçable entre deux butées respectivement de départ et d'arrivée bornant un trajet permettant le dégagement et l'obturation d'ouvertures de portes ou de fenêtres, ce déplacement pouvant se faire indifféremment dans les deux sens. Chaque vantail est relié mécaniquement à des moyens moteurs, auxquels sont affectés une unité de contrôle électronique comportant des moyens de mesure de la position du vantail et des moyens de détection des obstacles pendant le déplacement dudit vantail, des moyens de commande du déplacement de chaque vantail étant reliés à l'unité de contrôle.

Au sens de l'invention, ledit procédé se caractérise par le mode de fonctionnement suivant :
- A. En cas de détection d'un obstacle par les moyens de détection des obstacles au cours du déplacement du vantail, arrêt des moyens moteurs et mesure de la position dudit vantail à cet instant ;
- B. Si le vantail est dans une position située dans une portion prédéterminée du trajet, redémarrage automatisé du battant dans le même sens à l'issue d'une durée de temporisation prédéterminée.

En somme, le protocole mis en place pour faire face à la problématique particulière des vents forts est tel qu'il teste la position des vantaux au moment où le problème survient, ce qui peut donner une indication sinon de la nature précise dudit problème, au moins d'une tendance ou raison possible. En particulier lorsque les vantaux se trouvent dans une portion de leur trajet qui correspond à la phase de démarrage, lorsque le vantail s'écarte de la paroi dans laquelle se trouve la baie à obturer, puis pendant une grande partie de sa course à distance de ladite paroi, l'hypothèse d'un obstacle au mouvement constitué par un vent fort devient plausible. Le problème se pose de manière moins aigüe en fin de trajet, le battant y offrant une prise au vent réduite ou, selon la direction de celui-ci, pouvant être orienté favorablement par rapport à la poussée du vent.

Dans cette partie du trajet, l'aspect sécuritaire peut être considéré comme plus sensible lorsque les battants se rapprochent des parois, ce qui peut justifier le maintien de la gestion des obstacles tel qu'il est pratiqué jusqu'ici.

On distingue en d'autres termes, dans le trajet complet entre les deux butées de départ et d'arrivée, une première partie dans laquelle l'hypothèse venteuse peut prendre corps, et une seconde partie où le paramètre vent n'est pas significatif. La fraction de la course du vantail correspondant à la première partie est telle que, si le fonctionnement sécuritaire normatif classique s'appliquait en toutes circonstances et en tout point, chaque arrêt dû au vent imposerait à l'utilisateur d'inverser le sens de déplacement du vantail, ce qui conduirait de fait à des allers et retours intempestifs empêchant en pratique l'ouverture ou la fermeture complète des vantaux. Au contraire, selon l'invention, l'arrêt sécuritaire imposé par la norme est suivi, dans cette partie, par une continuation automatique du déplacement initial après une durée prédéterminée, permettant de compléter le trajet et de faire en sorte que la position finale désirée puisse être atteinte, même si c'est en plusieurs fois, à la suite d'arrêts successifs dus au vent. C'est en quelque sorte un mode sans échec.

Lorsque l'installation comporte deux vantaux, les déplacements des vantaux sont effectués séquentiellement, le vantail en mouvement en dernier lieu débutant son mouvement lorsque le premier a atteint sa butée d'arrivée. Cela résulte des contraintes dues à la sécurité « matérielle » qui est mise en œuvre dans l'invention, laquelle est basée sur une simple détection à seuil des surintensités de courant. Or, dans la plupart des configurations à deux vantaux, il n'y a qu'une seule unité électronique de commande. La mesure d'une surintensité se fait alors de manière non distinctive, par simple addition des intensités de courant mesurées dans les deux moyens d'entraînement. Il n'est donc pas réellement possible de savoir avec précision l'état de chacun desdits moyens d'entraînement, et par conséquent celui des vantaux associés.

Le mode de fonctionnement spécifique à l'invention est de préférence déclenchable par les moyens de commande du déplacement de chaque vantail, lorsqu'ils sont actionnés par l'utilisateur. Cela peut notamment se réaliser par une combinaison de touches, en ajoutant par exemple aux touches classiques d'ouverture/fermeture un appui sur une touche supplémentaire. En l'absence de manipulation spécifique à ce mode, la commande classique des moyens de commande implémente les séquences sécuritaires classiques : le redémarrage du vantail redevient uniquement manuel, et seulement autorisé en sens inverse du sens initial. Le caractère déclenchable signifie que la possibilité visant à faire continuer le déplacement d'un vantail dans le sens initial après un arrêt sur obstacle résulte d'un choix positif de l'utilisateur, qui l'active de manière volontaire en réponse à une situation donnée. Elle permet de garantir que les aspects sécuritaires de fonctionnement soient conservés dans le cas général, et de faire dépendre le nouveau mode de déplacement des vantaux de l'observation de l'utilisateur et/ou d'une commande ponctuelle. S'il s'avère que le changement d'état des vantaux entre une ouverture et une obturation des baies n'est pas possible alors même qu'aucun obstacle physique ne se dresse sur le parcours de ceux-ci, l'utilisateur a en quelque sorte la possibilité de forcer le fonctionnement motorisé à prendre en compte une situation particulière, à savoir par exemple une intensité venteuse inhabituelle.

De préférence encore, le déclenchement de ce mode de fonctionnement à l'aide des moyens de commande n'agit que dans le cadre d'un trajet unique de chaque vantail de l'ouverture suivant la commande de déclenchement. En d'autres termes, dès lors que ce mode de fonctionnement est déclenché, il reste actif jusqu'à atteindre la butée d'arrivée du vantail ou, dans le cas où il y a deux vantaux, la butée d'arrivée du dernier vantail en mouvement.

Par ailleurs, ledit mode de fonctionnement peut être activable/désactivable, par exemple par une commande particulière sur les moyens de commande. S'il est désactivé, le déclenchement dont il est question ci-dessus, obtenu par une manipulation spécifique, n'est pas possible.

Dans la plupart des cas, le trajet du vantail décrit une trajectoire d'allure circulaire sur un secteur angulaire limité par les deux butées et, dans cette hypothèse, la portion prédéterminée du trajet dans laquelle la séquence particulière de l'invention est mise en œuvre couvre un angle d'environ 5/6ème dudit secteur angulaire, débutant à la butée de départ.

Dans cette configuration, on divise en pratique le trajet en deux portions, seule la portion allant de la butée de départ à une position amorçant le rapprochement avec le plan de la paroi correspondant à la butée d'arrivée étant affectée par la séquence propre au procédé de l'invention, débrayant le système sécuritaire classique pour enclencher un protocole particulier adapté à un vent fort.

Dans la configuration réelle la plus courante, le secteur angulaire délimité par les deux butées de départ et d'arrivée couvre un angle total d'environ 180°. Toutes les baies pratiquées dans des parois planes obéissent en effet à ce modèle. Dans ce cas, le secteur angulaire de mise en œuvre de la séquence de l'invention débute dès la mise en mouvement, à la butée de départ, et se termine à environ 150° de celle-ci, soit à sensiblement 30° de la butée d'arrivée vers laquelle se dirige le vantail.

Dans nombre de configurations, les moyens d'entraînement sont constitués d'un moteur électrique, et la détection d'obstacle est alors basée, sans que cela soit limitatif, sur une détection d'intensité de courant réalisée par au moins un capteur d'intensité de courant placé dans le circuit. Dès lors que le moteur se bloque, le courant appelé augmente rapidement pour augmenter le couple moteur, pour faire face à ce que le système interprète comme un besoin de puissance supérieure. La mesure de l'augmentation du courant est donc un bon indicateur du blocage, notamment si un seuil de courant est mémorisé par le système, et si la valeur de courant mesurée est comparée en permanence à ce seuil : un dépassement du seuil est un signe fiable de blocage. Il s'agit là de la sécurité matérielle mentionnée auparavant, non intelligente, qui est en réalité opérée en redondance avec des algorithmes organisant une sécurité logicielle « intelligente » car adaptative par interprétation de signaux reflétant la pression de contact d'un vantail. Lorsque l'unité électronique enregistre un signal correspondant à une pression élevée manifestant potentiellement un contact, il commande le système de manière à la relâcher après quelques secondes. Alternativement, la détection d'obstacle peut être basée sur une détection d'arrêt de variation de mouvement ou, dans l'hypothèse d'un moteur asynchrone, de déphasage.

Dans une telle hypothèse de moyens d'entraînement constitués d'un moteur électrique tournant, les moyens de mesure de la position peuvent par exemple être basés sur un comptage des tours du moteur. Il est facile d'intégrer dans la commande un algorithme qui fait la conversion entre le nombre de tours du moteur et la distance angulaire parcourue, et par conséquent de tester si le vantail en cours de déplacement est, par exemple, à l'intérieur de la portion prédéterminée du trajet entre butées. En variante, la mesure de la position peut être basée sur une mesure de la durée de déplacement.

L'invention va à présent être décrite plus en détail, en référence à l'unique figure annexée, pour laquelle :

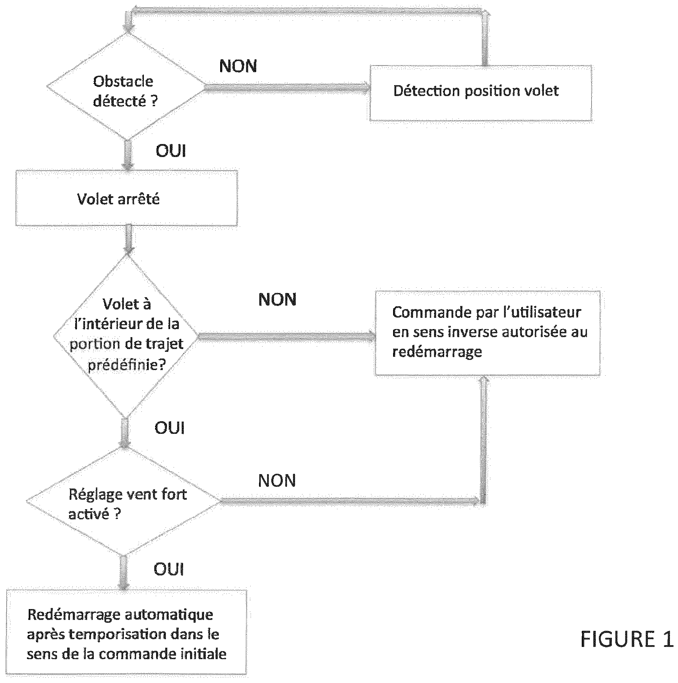

- la figure 1 représente un organigramme décrivant de manière simplifiée le mode de fonctionnement particulier du procédé de l'invention, prenant en compte la possibilité de gérer l'incidence « vent fort » sur le contrôle de vantaux ou de volets battants motorisés.

Seuls les aspects fonctionnels liés à cette séquence particulière apparaissent dans la figure, qui ne fait donc pas mention d'étapes antérieures du type test du statut du volet, en cours de déplacement ou immobile, étapes qui sont cependant nécessairement gérées par le système mais qui ne constituent pas l'invention. Dans l'hypothèse où le volet est en cours de déplacement, la première étape de la séquence propre à l'invention, qui est par conséquent représentée dans la figure 1, consiste en une détection de sa position à l'intérieur du trajet total qui lui est imparti, trajet en principe limité par les deux butées matérialisant respectivement l'ouverture et la fermeture complète de la baie.

La détection/mesure de la position s'effectue par exemple par comptage de tours du moteur électrique d'entraînement, ce nombre étant incrémenté en permanence à partir d'une position correspondant à une butée, et transformé en temps réel en une valeur angulaire dans le déplacement parcouru par le battant. Alternativement, une mesure du temps peut être mise en œuvre.

Puis, un test est effectué en continu pour détecter si un obstacle est rencontré au cours du déplacement.

Très classiquement, toujours si les moyens d'entraînement sont constitués d'un moteur électrique, la détection d'obstacle peut être notamment basée sur une détection d'intensité de courant réalisée par au moins un capteur d'intensité de courant dans le circuit du moteur. Comme mentionné ci-dessus, d'autres moyens de détection peuvent bien entendu être utilisés, comme l'arrêt de l'incrémentation du comptage des tours ou, pour un moteur électrique asynchrone, l'arrêt de la variation du déphasage, paramètres qui signalent également de manière significative l'apparition d'un blocage.

On a vu auparavant que, lorsque le mode de réalisation de cette mesure d'intensité est commun à deux vantaux, le déplacement desdits vantaux doit être réalisé séquentiellement.

Si un obstacle est détecté, le volet est immédiatement arrêté par le système, lequel contrôle ensuite si la position du volet au moment de l'arrêt se trouve dans la portion prédéterminée du trajet qui est prise en considération pour la mise en œuvre de la séquence particulière propre aux vents forts. Il suffit en l'espèce de comparer la valeur angulaire instantanée avec les valeurs angulaires des bornes de ladite portion de trajet prédéterminée. On a évoqué auparavant une alternative possible, qui consiste à baser la mesure de position sur une mesure du temps de fonctionnement, par exemple depuis le départ en butée.

Dans la négative, le fonctionnement automatisé des vantaux est classique, et ne fait pas intervenir la spécificité procédurale de l'invention. En substance, si un obstacle est détecté, l'utilisateur peut déclencher manuellement un déplacement, alors uniquement autorisé par le système dans le sens inverse du sens de déplacement initial.

Si le vantail se trouve dans ladite portion de trajet prédéterminée, l'invention peut le cas échéant trouver à s'appliquer en cas de détection d'obstacle, sans pour autant que cela soit systématique : c'est ce qui fait l'objet du test suivant dans la figure 1.

La possibilité ouverte par l'invention n'est en effet pas automatique, dans la configuration proposée dans la figure, et sa mise en œuvre dépend en fait d'une volonté circonstancielle de l'utilisateur. Le système teste par conséquent si cette possibilité additionnelle est activée ou non. En pratique, le déclenchement de ce mode de fonctionnement propre à l'invention s'effectue de préférence par manipulation d'une combinaison de touche par exemple sur une télécommande, ou alternativement en utilisant des commandes spécifiques, de type bouton(s) d'activation du déplacement des vantaux en mode « vent fort ». Lorsque cette manipulation est détectée, elle s'applique seulement - selon une conception préférentielle - pour le déplacement en cours du vantail ou de l'ensemble constitué par deux vantaux. Un obstacle détecté dans la plage de trajet prédéterminée est alors présumé être un vent de force suffisante pour bloquer le déplacement du volet, et le protocole suivi est classique dans un premier temps - arrêt de l'entraînement pendant une durée prédéterminée - puis il s'en écarte : le vantail est ensuite entraîné dans le même sens à l'issue d'une temporisation, le système signalant que le trajet entamé doit être terminé, et ne demandant pas de revenir en arrière comme c'est le cas dans le protocole sécuritaire classique.

Si ce mode de fonctionnement de l'invention n'a pas été déclenché par l'utilisateur, les vantaux ne sont pas « forcés » à un mode de fonctionnement spécifique. Ils se conduisent comme si l'obstacle est un élément matériel classique justifiant d'abord un arrêt, puis autorisant l'utilisateur à commander un déplacement uniquement en sens inverse. A noter qu'il est possible, en amont des possibilités de déclenchement ponctuelles, de permettre l'activation/désactivation de ce mode.

En résumé, l'apport de l'invention consiste de fait à permettre une possibilité supplémentaire dans le fonctionnement d'une installation de volets battants motorisés, ouvrant la possibilité de réagir différemment, au cours d'un scénario de détection d'obstacle, lorsque le blocage résulte de l'existence d'un vent suffisamment fort pour s'opposer aux déplacements d'au moins un volet.

L'invention ne se limite bien entendu pas aux exemples décrits et expliqués en référence à la figure, mais elle englobe les variantes et versions qui entrent dans la portée des revendications.

## Revendications

1. Procédé de gestion d'obstacles dans une installation contrôlant le déplacement d'au moins un vantail de volet battant ou de porte entraîné par des moyens moteurs, ledit vantail étant déplaçable entre deux butées respectivement de départ et d'arrivée bornant un trajet permettant le dégagement et l'obturation d'ouvertures de portes ou de fenêtres, le déplacement pouvant se faire indifféremment dans les deux sens, le vantail étant relié mécaniquement aux moyens moteurs, une unité de contrôle électronique comportant des moyens de mesure de la position du vantail et des moyens de détection des obstacles pendant le déplacement dudit vantail, des moyens de commande du déplacement de chaque vantail étant reliés à l'unité de contrôle, **caractérisé par** le mode de fonctionnement suivant :
- A. En cas de détection d'un obstacle par les moyens de détection des obstacles au cours du déplacement du vantail, arrêt des moyens moteurs et mesure de la position dudit vantail à cet instant ;
- B. Si le vantail est dans une position située dans une portion prédéterminée du trajet, redémarrage automatisé du battant dans le même sens à l'issue d'une durée de temporisation prédéterminée.

2. Procédé de gestion d'obstacles selon la revendication précédente, **caractérisé en ce que**, lorsque l'installation comporte deux vantaux, les déplacements des vantaux sont effectués séquentiellement, le vantail en mouvement en dernier lieu commençant son trajet lorsque le premier a atteint sa butée d'arrivée.

3. Procédé de gestion d'obstacles selon l'une des revendications précédentes, **caractérisé en ce que** ledit mode de fonctionnement est déclenchable par les moyens de commande du déplacement de chaque vantail.

4. Procédé de gestion d'obstacles selon la revendication précédente, **caractérisé en ce que** le déclenchement dudit mode de fonctionnement à l'aide des moyens de commande n'agit que dans le cadre d'un trajet unique de chaque vantail de l'ouverture suivant la commande de déclenchement.

5. Procédé de gestion d'obstacles selon l'une des revendications précédentes, **caractérisé en ce que** ledit mode de fonctionnement est activable/désactivable.

6. Procédé de gestion d'obstacles selon l'une des revendications précédentes, **caractérisé en ce que**, le trajet du vantail décrivant une trajectoire d'allure circulaire sur un secteur angulaire limité par les deux butées, la portion prédéterminée du trajet couvre un angle d'environ 5/6ème dudit secteur angulaire débutant à la butée de départ.

7. Procédé de gestion d'obstacles selon la revendication précédente, **caractérisé en ce que** le secteur angulaire délimité par les deux butées de départ et d'arrivée couvre un angle d'environ 180°.

8. Procédé de gestion d'obstacles selon l'une des revendications précédentes, **caractérisé en ce que**, les moyens d'entraînement étant constitués d'un moteur électrique, la détection d'obstacle est basée sur une détection d'intensité de courant réalisée par au moins un capteur d'intensité de courant, ou sur une détection d'arrêt de variation de mouvement ou de déphasage.

9. Procédé de gestion d'obstacles selon la revendication précédente, **caractérisé en ce que** les moyens de mesure de la position sont basés sur un comptage des tours du moteur électrique, ou sur une mesure de la durée de déplacement.

## Patentansprüche

1. Verfahren zum Bewältigen von Hindernissen in einer Anlage, die die Verschiebung von mindestens einem Flügelrahmen eines Klappladens oder einer durch Motormittel angetriebenen Tür steuert, wobei der Flügelrahmen zwischen zwei Anschlägen verschiebbar ist, die für einen Start beziehungsweise ein Ende sind, die einen Weg beschränken, der die Freigabe und den Verschluss von Tür- oder Fensteröffnungen ermöglicht, wobei die Verschiebung in die zwei Richtungen gleichermaßen erfolgen kann, wobei der Flügelrahmen mit den Motormitteln mechanisch verbunden ist, eine elektronische Steuereinheit Mittel zum Messen der Position des Flügelrahmens und Mittel zum Erfassen von Hindernissen während der Verschiebung des Flügelrahmens aufweist, wobei die Mittel zum Steuern der Verschiebung jedes Flügelrahmens mit der Steuereinheit verbunden sind, **gekennzeichnet durch** die folgende Funktionsweise:
- A. im Falle der Erfassung eines Hindernisses durch die Hinderniserfassungsmittel während der Verschiebung des Flügelrahmens, Stoppen der Motormittel und Messen der Position des Flügelrahmens zu diesem Zeitpunkt;
- B. falls sich der Flügelrahmen in einer Position befindet, die in einem vorbestimmten Abschnitt des Wegs gelegen ist, automatisches Neustarten des Flügels in derselben Richtung nach einer vorbestimmten Verzögerungsdauer.

2. Hindernisbewältigungsverfahren nach dem vorstehenden Anspruch, **dadurch gekennzeichnet, dass,** wenn die Anlage zwei Flügelrahmen aufweist, die Verschiebungen der Flügelrahmen sequentiell ausgeführt werden, wobei der sich als letztes verschiebende Flügelrahmen seinen Weg beginnt, wenn der erste seinen Endanschlag erreicht hat.

3. Hindernisbewältigungsverfahren nach einem der vorstehenden Ansprüche, **dadurch gekennzeichnet, dass** die Funktionsweise durch die Mittel zum Steuern der Verschiebung jedes Flügelrahmens auslösbar ist.

4. Hindernisbewältigungsverfahren nach dem vorstehenden Anspruch, **dadurch gekennzeichnet, dass** die Auslösung der Funktionsweise mittels der Steuermittel nur im Rahmen von einem einzigen Weg jedes Flügelrahmens der Öffnung gemäß dem Auslösebefehl wirkt.

5. Hindernisbewältigungsverfahren nach einem der vorstehenden Ansprüche, **dadurch gekennzeichnet, dass** die Funktionsweise aktivierbar/deaktivierbar ist.

6. Hindernisbewältigungsverfahren nach einem der vorstehenden Ansprüche, **dadurch gekennzeichnet, dass** der Weg des Flügelrahmens eine Bahn mit kreisförmigem Aussehen über einen durch die zwei Anschläge begrenzten Winkelbereich beschreibt, wobei der vorbestimmte Abschnitt des Wegs einen Winkel von ungefähr einem 5/6-tel des Winkelbereichs abdeckt, der an dem Startanschlag beginnt.

7. Hindernisbewältigungsverfahren nach dem vorstehenden Anspruch, **dadurch gekennzeichnet, dass** der Winkelbereich, der durch die zwei Anschläge für den Start und das Ende begrenzt ist, einen Winkel von ungefähr 180° abdeckt.

8. Hindernisbewältigungsverfahren nach einem der vorstehenden Ansprüche, **dadurch gekennzeichnet, dass** die Antriebsmittel aus einem Elektromotor bestehen, die Hinderniserfassung auf einer Stromstärkenerfassung, die durch mindestens einen Stromstärkensensor durchgeführt wird, oder auf einer Erfassung eines Stoppens einer Bewegungsvariation oder einer Phasenverschiebung basiert.

9. Hindernisbewältigungsverfahren nach dem vorstehenden Anspruch, **dadurch gekennzeichnet, dass** die Mittel zum Messen der Position auf einer Zählung von Umdrehungen des Elektromotors oder auf einer Messung der Verschiebungsdauer basieren.

## Claims

1. Method for managing obstacles in an installation which controls the movement of at least one leaf of a shutter panel or door that is driven by motor means, said leaf being movable between two stops, namely a starting stop and arrival stop, respectively, which limit a path for clearing and closing door or window openings, the movement being able to take place in either of the two directions, the leaf being mechanically connected to the motor means, an electronic control unit comprising means for measuring the position of the leaf and means for detecting obstacles during the movement of said leaf, means for controlling the movement of each leaf being connected to the control unit, **characterized by** the following mode of operation:
- A. in the event of an obstacle being detected by the obstacle detection means during the movement of the leaf, stopping the motor means and measuring the position of said leaf at this point;
- B. if the leaf is in a position located in a predetermined portion of the path, automatically restarting the panel in the same direction after a predetermined time delay.

2. Method for managing obstacles according to the preceding claim, **characterized in that**, when the installation comprises two leaves, the movements of the leaves are carried out sequentially, the leaf moving last beginning its path when the first has reached its arrival stop.

3. Method for managing obstacles according to either of the preceding claims, **characterized in that** said mode of operation can be triggered by the means for controlling the movement of each leaf.

4. Method for managing obstacles according to the preceding claim, **characterized in that** the triggering of said mode of operation using the control means only happens within the framework of a single path of each leaf of the opening following the trigger command.

5. Method for managing obstacles according to any of the preceding claims, **characterized in that** said operating mode can be activated/deactivated.

6. Method for managing obstacles according to any of the preceding claims, **characterized in that**, with the path of the leaf describing a circular path over an angular sector limited by the two stops, the predetermined portion of the path covers an angle of approximately 5/6ths of said angular sector starting from the starting stop.

7. Method for managing obstacles according to the preceding claim, **characterized in that** the angular sector delimited by the two stops, namely the starting stop and arrival stop, covers an angle of approximately 180°.

8. Method for managing obstacles according to any of the preceding claims, **characterized in that**, with the drive means consisting of an electric motor, the obstacle detection is based on detection of current intensity that is carried out by at least at least one current intensity sensor, or on detection of a stop in variation of movement or phase shift.

9. Method for managing obstacles according to the preceding claim, **characterized in that** the means for measuring the position are based on counting the revolutions of the electric motor, or on a measurement of the duration of movement.
